Europäisches Patentamt

(19) European Patent Office

Office européen des brevets

(11) Publication number : **0 286 233 B1**

# EUROPEAN PATENT SPECIFICATION

(12)

(45) Date of publication of patent specification :
**02.01.92 Bulletin 92/01**

(51) Int. Cl.[5] : **C02F 1/46**

(21) Application number : **88301961.4**

(22) Date of filing : **07.03.88**

(54) Water electrolyzing apparatus.

(30) Priority : **11.03.87 JP 55683/87**

(43) Date of publication of application :
**12.10.88 Bulletin 88/41**

(45) Publication of the grant of the patent :
**02.01.92 Bulletin 92/01**

(84) Designated Contracting States :
**DE FR GB IT NL**

(56) References cited :
**FR-A- 2 232 519**
**GB-A- 1 184 580**
**NL-A- 6 705 824**
**US-A- 1 840 105**
**US-A- 2 794 776**

(56) References cited :
**Patent Abstracts of Japan, vol. 10, no. 350
(C-387)(2406), November 26, 1986 & JP-A-61
149 289
Patent Abstracts of Japan, vol. 8, no.279
(C-257)(1716), December 20, 1984 & JP-A-59
147 692**

(73) Proprietor : **OMCO CO. LTD.**
**10-7, Tsurugamai 3-chome Ooimachi
Iruma-gun Saitama-ken (JP)**

(72) Inventor : **Okazaki, Tatsuo**
**7-18, Nishi 2-chome
Kamifukuoka-shi Saitama-ken (JP)**

(74) Representative : **Brooke-Smith, Fred et al
Stevens, Hewlett & Perkins 1 Serjeants' Inn
Fleet Street
London EC4Y 1LL (GB)**

## Description

The present invention concerns an apparatus for forming electrolytically ionized water and, more particularly, it relates a water electrolyzing apparatus using a plurality of electrolysis devices for electrolyzing water to form ionized alkaline water and acidic water in which they are connected such that only one of the electrolytically ionized water from an electrolyzing device at a certain stage is introduced to the water supply portion of the succeeding electrolysis device at the succeeding stage.

In an apparatus for electrolyzing water by charging water to an electrolysis vessel comprising an anode and a cathode partitioned by an electrolysis diaphragm and applying a DC voltage between both of the electrodes thereby obtaining ionized alkaline water and ionized acidic water, if the alkaline water and the acidic water discharged from the electrolysis device at the first stage are supplied to the cathode chamber and the anode chamber of the electrolysis device at the succeeding stage respectively and subjected to electrolysis again, there is no substantial change in the ion concentrations. In view of the above, the conventional apparatus for forming electrolytically ionized water have been constituted such that water is electrolyzed only for once and then discharged to an external water tap.

However, such an electrolyzing process that is conducted only for once results in the following problems.

At first, it is difficult to obtain a sufficient ionic concentration, for example, in the ionized alkaline water by single-stage electrolysis. Generally, water containing such nitrates or free carbonic ions is not suitable to drink and, particularly, nitrate concentration in under ground water reaches as high as 400 ppm due to ammonium sulfate contamination, causing serious circumstantial problems in France and other countries.

Since, nitrates and free carbonic ions in water can not be removed in such cases by single stage electrolysis it has been impossible to convert the water of this kind into satisfactory ionized alkaline water by electrolysis.

Also, in the case of obtaining alkaline water at a desired pH value by single-stage electrolysis of water, the maximum extraction ratio from water supplied to the electrolytic vessel, that is, the ratio of alkaline water to acidic water is about 2 : 1 at the highest. If the ratio of the alkaline water is increased more, pH value in the alkaline water becomes insufficient for practical use, and since about 1/3 of the water supplied as the starting material will be discarded the yield of the alkaline water formed in relation to the amount of water supplied is economically disadvantageous. Similar problems also occur in the case of obtaining acidic water.

Accordingly, it is a principal object of the present invention to provide an apparatus for forming electrolytically ionized water comprising a series of electrolysis devices in which only one of ionized alkaline water and ionized acidic water formed through the primary electrolysis is subjected to electrolysis at the secondary or further successive stages, capable of obtaining alkaline or acidic water at high concentration and capable of increasing the yield of ionized alkaline water or acidic water based on the amount of water supplied.

The present inventor has made various studies, taking notice on the finding that electroconductivity is improved in the ionized water formed through electrolysis and, as a result, has found that when only the ionized alkaline water obtained by electrolysis at a certain stage is subjected to electrolysis at the secondary or further successive stages by the method of introducing through the water supply portion of the electrolysis device at the succeeding stage for electrolysis, the acidic ingredient is removed stepwise, the alkaline ion concentration is remarkably improved and, when only the acidic water discharged from the electrolysis device at the primary stage is electrolyzed again in the electrolysis device at the secondary stage on the other hand, the acidic water is decomposed into alkaline water and acidic water thereby increasing the amount of the formed alkaline water based on the supplied water relatively, and has accomplished the present invention based on such a finding.

US-A-2794776 discloses an apparatus as described in the pre-characterized part of claim 1. According to the present invention, there is provided a water electrolyzing apparatus including a plurality of electrolysis devices arranged in succession, each comprising a vessel having a cathode, and an anode and diaphragm means partitioning the space between the anode and cathode to form a cathode chamber and an anode chamber, water supply channel for the supply of water to the devices, a first conduit in the communication with the cathode chamber for receiving ionized alkaline water and a second conduit in communication with the anode chamber for receiving ionized acidic water, characterized in that said diaphragm means comprises a diaphragm which constitutes the boundary between the cathode and anode chambers, in that the first conduits of all of the devices or the second conduits of all of the devices have respective discharge passages or open to a common first discharge passage for ionized water, and in that the other conduit of each device except the last device in the succession is connected to provide the supply of water to the next device of the succession, the last device in the succession having said other conduit thereof connected to a second discharge passage for, ionized water.

The invention will now be described in more detail with reference by way of example to the appended drawings, wherein

Figure 1 is a system diagram showing the fundamental constitution of the present invention ;

Figure 2 is a schematic vertical cross sectional view illustrating another embodiment of the present invention ;

Figure 3 is a view of another embodiment of the present invention in which the fundamental constitution is combined with other devices, which corresponding to Figure 1 ;

Figure 4 is a vertical cross sectional view illustrating another embodiment of the flow rate ratio control device shown in Figure 3 ;

Figure 5 is a view illustrating another embodiment of the present invention, which corresponds to Figure 3 in which a flow switch valve is incorporated to the fundamental constitution of the present invention ; and

Figure 6a through Figure 6d are vertical cross sectional views illustrating other embodiments of the magnetic generation device.

This invention will be explained for its preferred embodiments referring to the accompanying drawings.

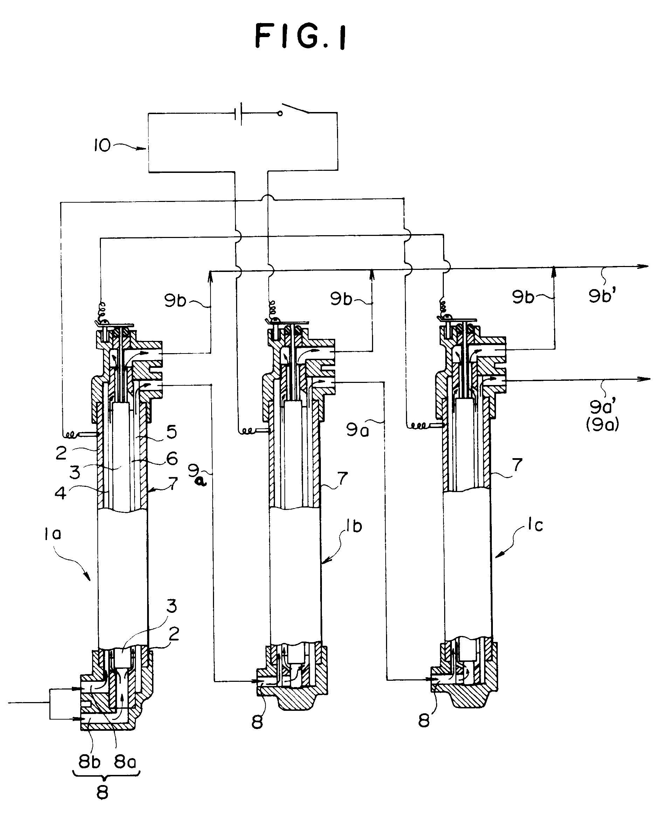

Figure 1 is a flow chart illustrating the basic constitution of the apparatus for forming electrolytically ionized water according to the present invention. As shown in the figure, a plurality of electrolysis units (devices) 1a, 1b and 1c are used in the apparatus of the present invention, in which each of the electrolysis units in the embodiment of Figure 1 comprises an electrolysis vessel 7 having a cathode 2 and an anode 3 opposed to each other and an electrolysis diaphragm 4 for partitioning the space between both of the electrodes 2, 3 into a cathode chamber 5 and an anode chamber 6.

A water supply channel 8 in communication with the inner electrode chambers is disposed on one side of the electrolysis vessel 7, while an ionized alkaline water discharge channel 9a in communication with the cathode chamber 5 and an ionized acidic water discharge channel 9b in communication with the anode chamber 6 are disposed on the other side of the electrolysis vessel 7.

Each of the electrolysis units 1a, 1b, 1c is so adapted that water supplied to the inside of the electrolysis vessel 7 is electrolyzed by electrolyzing DC voltage applied from a power source circuit 10 to both of the electrodes 2, 3, and alkaline water and acidic water are discharged from an alkaline water discharge channel 9a and an acidic water discharge channel 9b separately. Further, a plurality of electrolysis units are connected in two or more stages in series such that either one of the alkaline water discharge channel 9a or the acidic water discharge channel 9b from the primary electrolysis unit 1a is connected to the water supply channel 8 of the electrolysis unit 1b at the succeeding stage and, if required, one of the alkaline water discharge channel 9a or the acidic water discharge channel 9b of the second electrolysis unit 1b, that is, the same type of the discharge channel as that connected from the primary electrolysis unit 1a to the secondary electrolysis unit 1b is connected to the water supply channel 8 of the third electrolysis unit 1c as shown in the drawing.

In the embodiment shown in Figure 1, the ionized alkaline water discharge channel 9a is connected in series with a plurality of electrolysis units 1a, 1b and 1c, but a complementary structure, i.e., series connection of the ionized acidic water discharge channels 9b depending on the purpose of use is of course encompassed with the technical idea of the present invention. In either of the cases, water from the other discharge channels that are not connected in series may be discharged individually or, preferably, discharged collectively as a joined discharge channel 9b′ for the discharge channels 9b from a plurality of electrolysis units as illustrated in the drawing.

The cathode 2 and the anode 3 for the electrolysis units 1a, 1b, 1c may be made of different materials suitable to respective electrodes, but they may be preferably made of such electrode material used in common both for the cathode and the anode capable of conducting usual electrolytic process by switching the polarity of the electrolyzing voltage. Since the use of the electrodes made of such material enables to continue the operation for generating electrolytically ionized water by switching the polarity of the voltage to thereby dissolve calcium deposited in the electrolysis vessel 7 with acidic water during electrolysis, maintenance for cleaning can significantly be reduced.

The electrode material for such application uses can include, for example, those of porcelains, for example, ferrite, magnetite, ceramics applied with gold or platinum surface treatment with glacials ; those ceramics mixed with other electroconductive material ; other ceramics usable as the anode comprising ceramics titanium, titanium alloys, noble metal-plated titanium ; alloy materials for preventing consumption of the anode by the anode decay at the electrode surface by the function of electric charges of alloy ions with each other.

The water supply channel 8 to the electrolysis vessel 7 may be a common water supply channel as that for the secondary and the third electrolysis vessels 1b i.e., in common with both of the cathode chamber 2 and the anode chamber 3 in the electrolysis vessel 7, but it may be constituted as a pair of independent water supply channels 8a, 8b in communication individually with the cathode chamber 2 and the anode chamber 3. The main merit of the latter constitution is that since the chemical additives such as minerals to be supplied to the cathode chamber 2 can previously be introduced in admixture with water in the water supply channel 8a on the side of the cathode chamber 2, there is no trouble of disposing a chemical supply channel to the electrolysis vessel 7 and, further, the addition of the chemicals can be unified.

Further, a magnetic effect may be exerted on the water during electrolysis by using a permanent magnet to the electrodes 2 and/or 3.

Furthermore, the overall electrolytic efficiency in the apparatus according to the present invention can be improved further by reducing the electrode gap in the electrolysis unit at the succeeding stage relative to that in the electrolysis unit at the preceding stage, increasing the electrolyzing time in the succeeding stage or increasing the electrolyzing voltage at the succeeding stage.

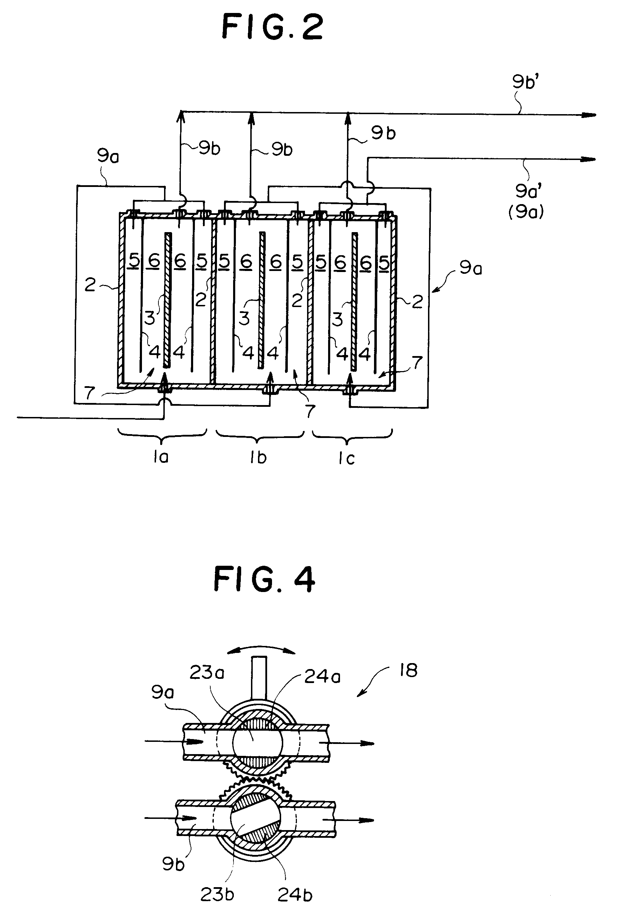

Although the use of a cylindrical electrolysis vessel is exemplified for the embodiment shown in Figure 1, it is of course possible to use a flat type electrolysis vessel as shown in Figure 2, in which each pair of plate-like cathode 2 and anode 3 is disposed in parallel on both opposite sides of a plate-like electrolytic diaphragm.

In the case of using the flat type electrolysis unit, it is preferred to dispose the water supply portion and The water discharge portion of the electrolysis vessel near the opposing ends of the diagonal line in a rectangular cross sectional form of the vessel. While the running water type electrolysis unit tends to generate heat if water under electrolysis causes stagnation, water can prevail well through every corners of the cross sectional rectangular form of the electrolysis vessel in such a constitution to reduce the stay of water at corner portions.

The foregoing constitution of the present invention can also be applied in the similar manner to the case of using a batch type electrolysis unit in which stationary water is electrolyzed for a predetermined length of time.

The fundamental constitution for attaining the principal purpose of the present invention is as has been described above, and it is possible to further improve the function of the entire apparatus by combining various types of units described later to the apparatus for forming electrolytically ionized water having the fundamental constitution as described above.

In the case of using the material in common both for the cathode 2 and the anode 3, the function of the electrolytically ionized water discharge channels 9a, 9b are changed by the switching of the voltage polarity at the electrodes to bring about confusion on the side of taking out water. In order to prevent this and enable to always take out specific kind of electrolytically ionized water from a specific water taking out port, a flow channel switching unit 11 is disposed to the ionized water discharge channel 9a′ at the final stage of the serially connected ionized water discharge channels (9a in the drawing) and to the ionized water discharge channels 9b′ on the other side after they are joined. It is of course possible to dispose the flow channel switching unit 11 to every ionized channels 9a, 9b for each of the electrolysis units 1a, 1b, 1c.

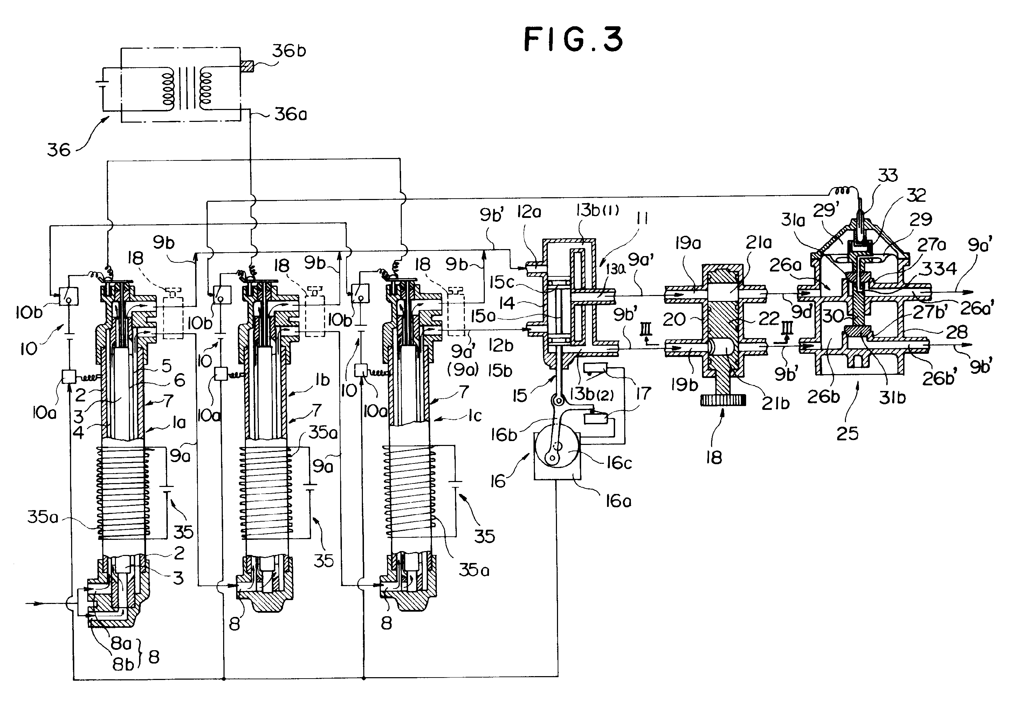

The flow channel switching valve 11 comprises, for example, as shown in Figure 3 a cylindrical casing 14 containing a pair of introduction portions 12a, 12b for connection with the discharge channels 9a′, 9b′ respectively and water discharge pipes 13a, 13b for separately discharging alkaline water and acidic water respectively and a flow channel switching slide valve 15 fitted in a liquid-sealing and slidable manner to the inside thereof. In this embodiment, the paired introduction portions 12a, 12b are disposed with a axial gap of the casing 14.

The water discharge pipe 13a of the paired discharge pipes 13a, 13b is disposed at a position between the introduction portions 12a, 12b, while the other water discharge pipe 13b is bifurcated at the junction with the casing 14 and the forked branches 13b(1), 13b(2) are in communication with the ends of the casing 14 respectively.

The slide valve 15 comprises a rod 15a and two valve bodies 15b, 15c secured thereto at a predetermined distance with each other. The valve bodies 15b and 15c are disposed in such a positional relationship that the communication of the introduction portions 12a and 12b are switched upon reciprocal movement of the slide valve 15 from the communication state with the one water discharge pipe 13a to the communication state with the other water discharge pipe 13b by way of the casing end alternately in an interlocked manner.

Although the slide valve 15 may be driven manually, it is preferably actuated by a driving device 16 as shown in the drawing by using a motor 16a. Further, a detector 17 such as a limit switch may be disposed near the slide valve 15 for detecting the position of the valve 15 and controlling the motor 16a by the detection signal. Further, the motor 16a may be interlocked with the polarity changing switch 10a for the electrolysis units 1a, 1b, 1c so that the flow channel in the flow channel switching valve device 11 can be switched upon voltage polarity changing of the electrolysis unit 1 (or vice versa). By the way, in the illustrated embodiment, the top end of the slide valve 15 and the motor 16a are connected by way of a crank 16b and a cam 16c so that the slide valve 15 can be driven reciprocately by the electric driving, as well as a detector 17 such as a limit switch is disposed near the crank 16b for detecting the position of the slide valve 15.

The driving means is not necessarily restricted only to the embodiment shown in the drawing but it may be actuated by a solenoid or the like.

Alternatively, the polarity changing switch 10a and the flow channel switching valve device 11 may be switched automatically on every predetermined of time by using a timer.

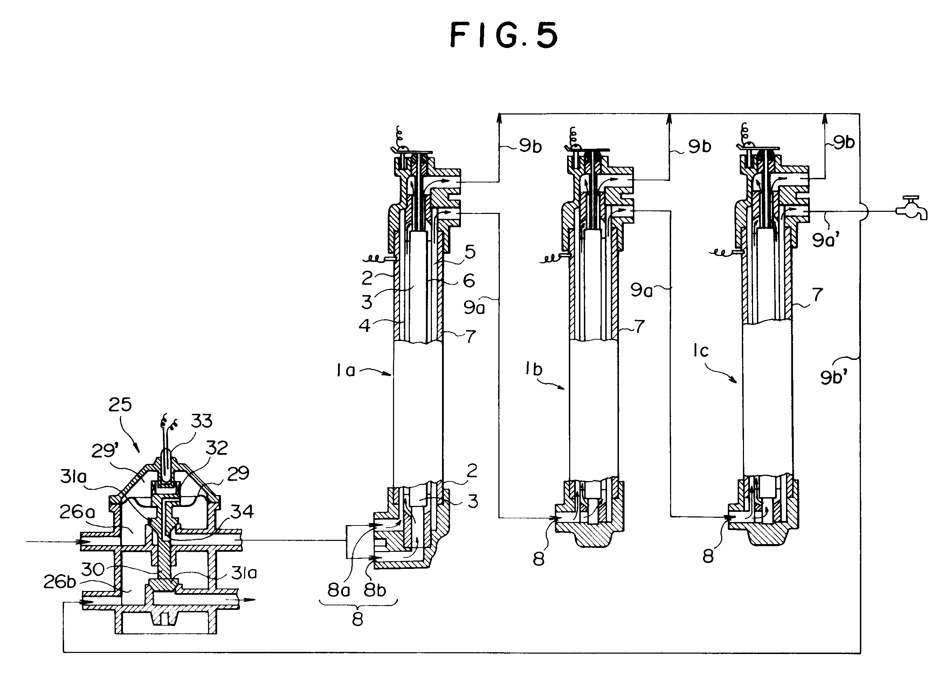

Furthermore, a flow rate ratio control unit 18 may be disposed to the pair of the ionized water discharge channels 9a, 9b (or 9a′, 9b′) of the water electrolyzing apparatus according to the present invention for adjusting the ratio of the flow rate between both of the discharge channels thereby controlling the pH value of the water formed by electrolysis. The flow rate ratio control device may comprise, for example, as shown in Figure 3, a valve case 20 having two channels 19a, 19b for connection with a pair of ionized water discharge channels 9a′, 9b′, and coaxial type valve 22 tightly fitted to the valve casing 20 and having a pair of through holes 21a, 21b formed at different angles to the direction of the corresponding discharge water channels formed corresponding to the two channels 19a, 19b. Further, the rotary type valve 22 may be replaced with such a structure, not illustrated, that a slide valve body having a pair of through holes or valves displaced slightly from the gap between the two channels 19a, 19b is slidably fitted to the inside of the casing, so that the flow rate ratio between the channels 19a, 19b is adjusted by moving the slide valve body axially at the inside of the valve casing. Furthermore, it may be a parallel-axis type flow rate ratio control valve, as shown in Figure 4, comprising a pair of outer teethed rotary valve bodies 24a, 24b having lateral channels 23a, 23b respectively corresponding to the discharge channels 9a, 9b in which the respective valve bodies are engaged with each other in a manner capable of interlocking by way of peripheral gears such that the respective valve body channels 23a, 23b may take different angular positions to the pipeway direction of the corresponding discharge channels 9a, 9b. Any two interlocking valve mechanisms may be used so long as they are adapted such that when one of them is actuated in the direction of increasing the opening degree, for example, of the alkaline water discharge channel 9a′, the other of them is driven to restrict the opening degree for the acidic water discharge channel 9′ in view of the positional relationship with the pipeway direction of the respective discharge channels 9a, 9b′.

In the embodiment shown in Figure 3, although the flow rate ratio control device 18 is disposed to the ionized water discharge channels 9a′, 9b′ at the final stage, it may be disposed to the electrolyzed water discharge channel 9a, 9b for each of the electrolytic units 1a, 1b, 1c as shown by the phantom line in Figure 3.

Further, in the apparatus according to the present invention, a 2-stage flow switch valve 25 capable of generating ON-OFF signals may be disposed to the pair of electrolyzed water discharge channels 9a″, 9b″.

The 2-stage flow switch valve 25 illustrated in Figure 3 comprises two systems of channels 26a, 26b for communication with the pair of discharge channels 9a′, 9b′, valve seats 27a, 27b disposed for opening/closing the respective channels 26a, 26b, which are contained in a valve casing 28, a diaphragm 29 disposed in one of the channels and moved vertically by hydraulic pressure in the channel, a valve rod 30 integrally secured to the diaphragm 29 and passing through the two channels 26a, 26b, a main valve body 31a and a following valve body 31b secured integrally to the valve rod 30 for simultaneously opening/closing the two valve seats 27a, 27b, so that the two systems channels 26a, 26b are opened/closed simultaneously by the two valve bodies 31a, 31b of the valve rod 30 moved integrally with the diaphragm 29.

A water passing channel 34 is formed in the valve rod 30 for communicating the chamber 29′ above the diaphragm 29 with the channel 26a downstream to the main valve body 27b and adapted so that when a cock on the side of taking out water is turned ON and OFF, the pressure in the chamber 29′ above the diaphragm 29 varies depending on the movement of the water by way of the water supply channel 34 to thereby actuate the diaphragm 29.

Further, a magnet 32 is attached on one side of the valve rod 30, whereas an ON-OFF signal generation device 33 such as a lead switch for generating signals upon approaching and aparting of the magnet 32 is mounted on the opposite side, so that the operation of the electrolyzing voltage circuit 10 can be controlled by the electrolysis unit.

Figure 5 illustrates a further embodiment in which a flow valve switch 25 is assembled into the electrolysis apparatus having the fundamental constitution according to the present invention. This embodiment is adapted such that water supplied as the starting material to the primary electrolysis unit 1a is introduced by way of the channel 26a of the 2-stage flow switch valve 25 on the side of the main valve body 31a (the channel on the side of disposing the diaphragm), as well as the acidic water from the electrolysis units 1a, 1b, 1c is discharged passing through the channel 26b of the flow switch valve 25 on the side of the following valve body 31b. Since the alkali water is not passed through the flow switch valve 25 in this structure, the flow switch valve free from the effect of calcium deposited in the alkaline water.

Then, it is also possible to dispose a magnetic supply device 35 near one or all of the electrolysis vessels 7 of the electrolysis unit to thereby exert the magnetic effect on the water in the vessel. The magnetic supply device 35 may be structured by disposing a coil unit 35a forming magnetic fields by electric current to the outside of the electrolysis vessel 7 as shown in Figure 3. Further, permanent magnets 35b may be disposed instead of them.

Further, the permanent magnet 35b as the magnetic supply device 35 may be disposed to the inside of the electrolysis vessel 7.

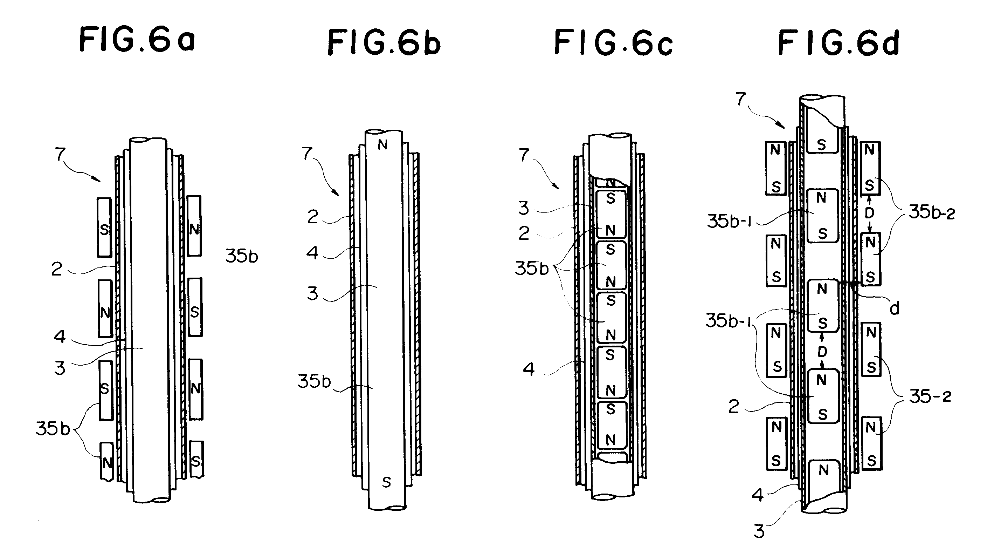

For example, the electrode 3 itself in the electrolysis vessel 7 may be constituted with a permanent magnet 35b or, as shown in Figure 6c, the inner electrode 3 is made tubular, and the permanent magnet 35b may be incorporated to the inside thereof.

Further, as shown in Figure 6d, it may also be adapted so that a plurality of inner permanent magnets 35b-1 are disposed at a predetermined interval along the longitudinal direction and a plurality of ring-like permanent magnets 35b-2, - - - - may be disposed at a predetermined interval also in the longitudinal direction at the outside of the electrolysis vessel 7. In this case, it is preferred that the inner permanent magnets 35b-1 and the outer permanent magnets 35b-2 are set such that the N and S poles of the adjacent magnets are opposed to each other, as well as the inner magnets 35b-1 and the outer magnets 35b-2 are also disposed such that their N and S poles are opposed to each other on both sides of the electrode chamber 5 and 6. As shown in the drawing, it is more preferable that each of the two outer magnets 35b-2 is disposed so as to overriding the two adjacent inner magnets 35b-1, since the magnetic force can uniformly exerted in the longitudinal direction of the electrode chamber.

In the case of the embodiment shown in Figure 6d, it is desirable that the longitudinal distance D of the inner or the outer magnets is made greater than the distance d between the inner magnet 35b-1 and the outer magnet 35b-2. If the longitudinal distance of the magnets is shorter than that between the inner and the outer magnets, the larger magnetic force is exerted in the longitudinal direction to reduce the efficiency of the magnetic effect on the electrode chambers 5, 6.

Further, as shown in Figure 3, it is also possible that an electron-inducing high DC or AC voltage generating device 36 having an output terminal 36b for one pole being insulated is disposed to a portion or all of a plurality of electrolysis units 1a, 1b, 1c used in the apparatus according to the present invention, in addition to the electric circuit 10 for applying electrolysis voltage, and the output terminal for the other pole of the high voltage generation circuit 36, that is, the non-insulation side terminal is electrically connected by way of an electro-conductor to the inner electrode 3 in the electrolysis vessel 7 thereby inducing electrons e⁻ to the water in the electrolysis vessel 7. The voltage applied in this case from the high voltage generation unit 36 is as high as from about 300 to about 10,000 V. However, the voltage applied for electron induction is not determined uniformly depending on the distance between both of the electrodes 2, 3 in the electrolysis vessel 7. That is, if the voltage applied is too high relative to the distance between both of the electrodes 2 and 3, the electrodes will be short-circuitted failing to obtain the purpose. Accordingly, the voltage of the high voltage generation unit 36 is set to such a suitable level depending on the distance between the electrodes 2,3 so as not to short-circuit the electrodes but effectively induce electrons e⁻.

In the illustrated embodiment, although the side of the alkaline water discharge channels is connected in series to a plurality of electrolysis units, the present invention also includes the case of connecting the discharging channels on the side of acidic water in series. The latter case can be used in the case of electrolyzing acidic water obtained from the electrolysis at the preceding stage further into alkaline water and acidic water thereby increasing the amount of the alkaline water.

In the embodiment shown in Figure 1, since only the ionized alkaline water formed from each of the electrolysis units is connected in series with the electrolysis unit at the succeeding stage for further electrolyzing processing, the acidic ingredient is removed from alkali water on every electrolyzing process in electrolysis units and, accordingly, water at increasing alkali concentration can gradually be obtained to form alkaline water at high concentration. Particularly, since nitrate or free carbonic acid in water can be removed to render the water alkaline, the present invention can also be utilized for the purification of underground water contaminated with fertilizers.

While on the other hand, in the case of serially connecting the side of the discharge channels for the acidic ionized water, since part of the water discharged as acidic water from the unit at the preceding stage is partially further separated as alkaline water by the electrolyzing process in the electrolysis unit at the next stage, the amount of the alkaline water formed is increased to utilize the supplied water more efficiently. The situation is the same also in the case of preparing acidic water.

In the apparatus as described above, in the case of using material used in common both for the cathode and the anode of the electrodes 2 and 3 of the electrolysis unit, cleaning for calcium deposited in the electrolysis vessel can be conducted automatically along with the continuous conduction for the electrolysis by switching the voltage polarity of the electrodes. If the flow channel switching unit 16 is used together, since the water is discharged from the predetermined water taking out port irrespective of the polarity switching in the electrolysis unit, there is no worry of mistaking the alkaline water and the acidic water to each other at the water taking out port.

Since the ratio for the amount of water passing through each of the electrode chambers is varied by operating the flow rate ratio control unit 18, the pH value of ionized water formed is varied. Accordingly, pH can be adjusted by simple procedures.

In the case of incorporating the 2-stage flow switch valve 25 to the apparatus according to the present invention, when a tap on the water taking out side of utilizing discharge channel is turned On and OFF, it also controls ON and OFF of the other discharging channel in an interlocking manner and the ON-OFF operation of the tap and the ON-OFF operation of the electrolysis unit are interlocked. Particularly, in the case of flowing supply water and acidic water to the two channels of the 2-stage flow switch valve, since the calcium deposited in the alkaline water is eliminated, the valve durability can be remarkably improved.

In a case where the magnetic generation device 35 is incorporated in the apparatus according to the present invention and the magnetic force is exerted on water during electrolysis from the magnetic generation device, water is easily put under the magnetic effect and it is possible to effectively produce magnetized ionized water and the ion permeation state through the diaphragm can be controlled in various ways since water is electrolyzed under the effect of magnetic force. The ion hydration due to electrolysis and physiological activation due to magnetization can be interacted advantageously with each other.

Further, when a high voltage generation unit 36 insulated at one output terminal is disposed to the electrolysis unit of the apparatus according to the present invention and a high voltage (for instance 100-5000 V) is applied from the high voltage generation unit to the electrode of the electrolysis vessel, electrons are induced into the electrolysis vessel. Accordingly, since electrolyzed water is improved into water containing more electrons $e^-$, water desirable for keeping health can be obtained, as well as ionized state such as of calcium, etc. in the ionized alkaline water can be maintained for a long period of time due to the presence of electrons $e^-$ thereby promoting the replacement with iron ion (Fe) in the iron pipes to retain the generation of rusts. Further, since the gaseous ingredients in the electrolyzed water are also ionized upon receiving electrons $e^-$, it can also prevent the occurrence of rusts in the iron pipes due to oxygens, etc.

## Claims

1. A water electrolyzing apparatus including a plurality of electrolysis devices (1a, 1b, 1c) arranged in succession, each comprising a vessel (7) having a cathode (2) and an anode (3) and diaphragm means (4) partitioning the space between the anode and cathode to form a cathode chamber (5) and an anode chamber (6), water supply channel means (8) for the supply of water to the devices, a first conduit (9a) in communication with the cathode chamber for receiving ionized alkaline water and a second conduit (9b) in communication with the anode chamber for receiving ionized acidic water, characterized in that said diaphragm means comprises a diaphragm (4) which constitutes the boundary between the cathode and anode chambers (5, 6), in that the first conduits (9a) of all the devices or the second conduits (9b) of all of the devices have respective discharge passages or open to a common first discharge passage (9a', 9b') for ionized water, and in that the other conduit of each device (1a, 1b) except the last device in the succession is connected to provide the supply of water to the next device of the succession, the last device (1c) in the succession having said other conduit (9a) thereof connected to a second discharge (9a') for ionized water.

2. A water electrolyzing apparatus as claimed in claim 1, wherein the same electrode material is used for both the cathode and the anode enabling operation to change the supplies of acidic and alkaline electrolytically ionized water about by switching the polarity of the electrolyzing voltage.

3. A water electrolyzing apparatus as claimed in claim 2, comprising a switching device (11) responsive to the flow rate in said common first ionized water discharge passage (9b') and to the flow rate in the second ionized water discharge passage (9a').

4. A water electrolyzing apparatus as claimed in any one of claims 1 to 3 comprising a flow rate ratio control unit (18) responsive to the ratios of flow rates in the first and second discharge passages (9a', 9b').

5. A water electrolyzing apparatus as claimed in any one of claims 1 to 4, comprising a flow rate ratio control unit responsive to the flow rate ratios in ionized water discharge channels (9a, 9b) of one or more of the succession of electrolysis devices.

6. A water electrolyzing apparatus as claimed in any one of claims 1 to 5, wherein a 2-stage interlocking type flow switch valve (25) having a pair of independent channels (26a, 26b) is provided in association with the first and second ionized water discharge passages (9a', 9b').

7. A water electrolyzing apparatus as claimed in any one of claims 1 to 5, wherein a 2-stage interlocking type flow switch valve (25) having a pair of independent channels (26a, 26b) is provided in association with the water supply channel (8) and said common first ionized water discharge passage (9b').

8. A water electrolyzing apparatus as claimed in any one of claims 1 to 7, further comprising a magnetic supply device (35) for forming a magnetic field inside the electrolysis vessel is provided in association with one or more of the electrolysis devices.

9. A water electrolysis apparatus as claimed in claim 8, wherein at least one of the electrodes of the electrolysis vessel is a permanent magnet (35b).

10. A water electrolyzing apparatus as claimed in any one of claims 1 to 9, wherein a DC or AC electron inducing high voltage generation device (36) insulated at one of the terminals is disposed, the other uninsulated terminal of said high voltage generation unit being electrically connected to either one of the electrodes of one or more of the electrolysis devices.

## Patentansprüche

1. Wasser-Elektrolyse-Gerät, welches eine Vielzahl von aufeinanderfolgenden Elektrolysevorrichtungen (1a, 1b, 1c) beinhaltet, von denen jedes ein Gefäß (7), das eine Kathode (2) und eine Anode (3) und Membrananordnung (4) hat, welche den Raum zwischen der Anode und der Kathode abteilt, um eine Kathodenkammer (5) und eine Anodenkammer (6) zu bilden, Wasserversorgungskanäle (8) für das Zuführen von Wasser zu den Vorrichtungen, eine erste mit der Kathodenkammer in Verbindung stehende Leitung (9a) zum Aufnehmen von ionisiertem alkalischem Wasser und eine zweite, mit der Anodenkammer in Verbindung stehenden Leitung (9b) zum Aufnehmen von ionisiertem saurem Wasser, dadurch gekennzeichnet, daß die Membrananordnung eine Membran (4) umfaßt, welche die Grenze zwischen der Kathoden- der Anodenkammer (5,6) bildet, daß die ersten Leitungen (9a) aller Vorrichtungen oder die zweiten Leitungen (9b) aller Vorrichtungen jeweils Abgabeleitungen haben oder sich in eine gemeinsame erste Abgabeleitung (9a', 9b') für ionisiertes Wasser öffnen und daß die andere Leitung jeder Vorrichtung (1a, 1b) ausser der letzten Vorrichtung in der Folge mit der nächsten Vorrichtung in der Reihenfolge verbunden ist, um die Wasserversorgung zu schaffen, wobei bei der letzten Vorrichtung (1c) in der Reihenfolge die andere Leitung (9a) mit einer zweiten Abgabeleitung (9a') für ionisiertes Wasser verbunden ist.

2. Wasser-Elektrolyse-Gerät nach Anspruch 1, dadurch gekennzeichnet, daß das gleiche Elektrodenmaterial sowohl für die Kathode als auch für die Anode verwendet wird, das den Vorgang eines Wechsels der Versorgung mit saurem oder alkalischem elektrolytisch ionisiertem Wasser ermöglicht, indem die Polarität der Elektrolysespannung umgeschalten wird.

3. Wasser-Elektrolyse-Gerät gemäß Anspruch 2, dadurch gekennzeichnet, daß es eine Umschaltvorrichtung (11) enthält, die auf die Durchflußrate in der gemeinsamen ersten Abgabeleitung (9b') für ionisiertes Wasser und auf die Durchflußrate in der zweiten Abgabeleitung (9a') für ionisiertes Wasser anspricht.

4. Wasser-Elektrolyse-Gerät gemäß einem der Ansprüche 1 bis 3, dadurch gekennzeichnet, daß es eine Durchflußratenverhältnis-Kontrolleinheit (18) enthält, die auf das Verhältnis der Durchflußraten in der ersten und zweiten Abgabeleitung (9a', 9b') anspricht.

5. Wasser-Elektrolyse-Gerät gemäß einem der Ansprüche 1 bis 4, dadurch gekennzeichnet, daß es eine Durchflußratenverhältnis-Kontrolleinheit enthält, die auf die Durchflußratenverhältnisse in den Abgabekanälen (9a, 9b) für ionisiertes Wasser einer oder mehrerer der aufeinanderfolgenden Elektrolysevorrichtungen anspricht.

6. Wasser-Elektrolyse-Gerät gemäß irgendeinem der Ansprüche 1 bis 5, dadurch gekennzeichnet, daß ein in zwei Stufen eingreifendes Strömungsumschaltventil (25), das ein Paar unabhängiger Kanäle (26a, 26b) hat, in Verbindung mit den ersten und zweiten Abgabeleitungen (9a', 9b') für ionisiertes Wasser vorgesehen ist.

7. Wasser-Elektroloyse-Gerät gemäß irgendeinem der Ansprüche 1 bis 5, dadurch gekennzeichnet, daß ein in zwei Stufen eingreifendes Strömungsumschaltventil (25), das ein Paar unabhängiger Kanäle (26a, 26b) hat, in Verbindung mit dem Wasserversorgungskanal (8) und der gemeinsamen ersten Abgabeleitung (9b') für ionisiertes Wasser vorgesehen ist.

8. Wasser-Elektrolyse-Gerät gemäß irgendeinem der Ansprüche 1 bis 7, dadurch gekennzeichnet, daß es weiters eine magnetische Versorgungseinrichtung (35) enthält, um in dem Elektrolysegefäß ein magnetisches Feld zu erzeugen, und daß diese in Verbindung mit einem oder mehreren der Elektrolysevorrichtungen vorgesehen ist.

9. Wasser-Elektrolyse-Gerät gemäß Anspruch 8, dadurch gekennzeichnet, daß zumindestens eine der Elektroden des Elektrolysegefäßes ein Permanentmagnet (35b) ist.

10. Wasser-Elektrolyse-Gerät gemäß irgendeiner der Ansprüche 1 bis 9, dadurch gekennzeichnet, daß eine elektroneninduzierende Gleichstrom oder Wechselstrom-Hochspannungs-Erzeugungsvorrich tung (36), die auf einem Kontakt isoliert ist, während der andere nichtisolierte Kontakt dieser Hochspannungs-Erzeugungseinrichtung elektrisch mit einer der beiden Elektroden von einer oder mehrerer der Elektrolyse-Vorrichtungen verbunden ist, vorgesehen ist.

## Revendications

1. Appareil pour réaliser l'électrolyse de l'eau, comportant plusieurs dispositifs d'électrolyse (1a, 1b, 1c) disposés en série, dont chacun comprend une cuve (7) pourvue d'une cathode (2) et d'une anode (3) et des moyens formant diaphragme (4) qui subdivisent l'espace compris entre l'anode et la cathode pour définir une chambre de cathode (5) et une chambre d'anode (6), des moyens formant canaux d'alimentation d'eau (8) pour alimenter en eau les dispositifs, un premier conduit (9a) en communication avec la chambre de cathode pour recevoir de l'eau alcaline ionisée, et un second conduit (9b) en communication avec la chambre d'anode pour recevoir de l'eau acide ionisée, caractérisé en ce que lesdits moyens formant diaphragme comportent un diaphragme (4) qui constitue la limite entre les chambres de cathode et d'anode (5, 6), en ce que les premiers conduits (9a) de tous les dispositifs ou les seconds conduits (9b) de tous les dispositifs possèdent des passages d'évacuation respectifs ou débouchent sur un premier passage d'évacuation commun (9a', 9b') pour l'eau ionisée, et en ce que l'autre conduit de chacun des dispositifs (1a, 1b), à l'exception du dernier dispositif de la série, est raccordé pour assurer l'alimentation en eau du dispositif suivant de la série, le dernier dispositif (1c) de la série ayant son autre conduit (9a) relié à une seconde évacuation (9a') pour l'eau ionisée.

2. Appareil pour réaliser l'électrolyse de l'eau, selon la revendication 1, dans lequel le même matériau d'électrode est utilisé aussi bien pour la cathode que pour l'anode, ce qui permet d'opérer pour changer les alimentations en eau acide et alcaline ionisée par électrolyse, en permutant la polarité de la tension électrolytique.

3. Appareil pour réaliser l'électrolyse de l'eau, selon la revendication 2, comportant un dispositif de permutation (11) sensible au débit existant dans ledit premier passage d'évacuation d'eau ionisée commun (9b') et au débit existant dans le second passage d'évacuation d'eau ionisée (9a').

4. Appareil pour réaliser l'électrolyse de l'eau, selon l'une quelconque des revendications 1 à 3, comportant une unité de contrôle de rapport de débits (18) sensible aux rapports de débits existant dans les premier et second passages d'évacuation (9a', 9b').

5. Appareil pour réaliser l'électrolyse de l'eau, selon l'une quelconque des revendications 1 à 4, comportant une unité de contrôle de rapport de débits sensible aux rapports de débits existant dans les canaux d'évacuation d'eau ionisée (9a, 9b) de l'un au moins de la série de dispositifs d'électrolyse.

6. Appareil pour réaliser l'électrolyse de l'eau, selon l'une quelconque des revendications 1 à 5, dans lequel il est prévu, en association avec les premier et second passages d'évacuation d'eau ionisée (9a', 9b'), une soupape de permutation d'écoulement du type à verrouillage à deux étapes (25) qui possède deux canaux indépendants (26a, 26b).

7. Appareil pour réaliser l'électrolyse de l'eau, selon l'une quelconque des revendications 1 à 5, dans lequel il est prévu, en association avec le canal d'alimentation en eau (8) et ledit premier passage d'évacuation d'eau ionisée commun (9b'), une soupape de permutation d'écoulement du type à verrouillage à deux étapes (25) qui possède deux canaux indépendants (26a, 26b).

8. Appareil pour réaliser l'électrolyse de l'eau, selon l'une quelconque des revendications 1 à 7, comportant également, prévu en association avec l'un au moins des dispositifs d'électrolyse, un dispositif générateur de champ magnétique (35) destiné à établir un champ magnétique à l'intérieur de la cuve électrolytique.

9. Appareil pour réaliser l'électrolyse de l'eau, selon la revendication 8, dans lequel l'une au moins des électrodes de la cuve électrolytique et un aimant permanent (35b).

10. Appareil pour réaliser l'électrolyse de l'eau, selon l'une quelconque des revendications 1 à 9, dans lequel il est prévu un dispositif générateur de haute tension inducteur d'électrons de courant continu ou de courant alternatif (36) isolé au niveau de l'une de ses bornes, l'autre borne non isolée dudit dispositif générateur de haute tension étant reliée électriquement à l'une ou l'autre des électrodes de l'un au moins des dispositifs d'électrolyse.

# FIG.1

# FIG.2

# FIG.4

# FIG.3

EP 0 286 233 B1

FIG.5

# FIG.6a    FIG.6b    FIG.6c    FIG.6d

EP 0 286 233 B1